# EUROPÄISCHE PATENTSCHRIFT

(11) **EP 0 938 947 B1**
(45) Veröffentlichungstag und Bekanntmachung des Hinweises auf die Patenterteilung: **08.01.2003**
(21) Anmeldenummer: 99810122.4
(22) Anmeldetag: 12.02.1999
(51) Int. Cl.: B23Q 11/00

(54) **Vorrichtung zum Absaugen von flüssigen Medien**
Suction device for fluids
Dispositif pour aspirer des fluides

(30) Priorität: 26.02.1998 DE 19807812
(43) Veröffentlichungstag der Anmeldung: 01.09.1999
(73) Patentinhaber: HILTI Aktiengesellschaft, 9494 Schaan (LI)
(72) Erfinder: Deutschenbaur, Paul, 82110 Germering (DE); Golubovic, Goran, 81369 München (DE)
(74) Vertreter: Wildi, Roland

(56) Entgegenhaltungen:
- DE-U- 8 813 719
- FR-A- 2 324 401
- GB-A- 328 246
- US-A- 3 033 298

## Beschreibung

Die Erfindung betrifft einen Absaugkopf für eine Absaugvorrichtung gemäss dem Oberbegriff des Patentanspruchs 1.

Bei der Herstellung von Bohrungen in einem harten Untergrund wie Beton, Gestein, Stahl oder dergleichen wird ein Kühlmittel zum Kühlen des Bohrwerkzeuges und zum Abtransport des Bohrkleins verwendet. Damit der Bereich um die Bearbeitungsstelle möglichst sauber gehalten werden kann, werden beispielsweise Absaugvorrichtungen mit einem Absaugkopf verwendet, der den bearbeitungsseitigen Endbereich des Bohrwerkzeuges umgibt, die Bearbeitungsstelle nach aussen hin abdichtet und über einen Absaugstutzen mit einer externen Einrichtung zur Erzeugung eines Unterdruckes in Verbindung steht.

Eine derartiger Absaugkopf ist beispielsweise aus dem DE-GM 8 813 719 bekannt. Dieser bekannte Absaugkopf weist einen ringförmigen Trägerkörper auf, der an einem Führungsgestänge befestigt ist. Ein Absaugstutzen steht über eine Gewindeverbindung mit dem Trägerkörper in Verbindung. Das bohrrichtungsseitige freie Ende des Trägerkörpers wird von einem elastischen Dichtungselement in Bohrrichtung überragt. Entgegen der Bohrrichtung schliesst sich an den Trägerkörper eine Distanzhülse an, die der Aufnahme eines abnehmbaren, hülsenförmigen Führungskörpers dient. Dieser Führungskörper weist einen Boden mit einer Bohrung auf, deren Durchmesser jeweils im wesentlichen dem Aussendurchmesser des verwendeten Bohrwerkzeuges entspricht.

Ferner ist aus der GB 328,246 ein Absaugkopf mit einem ringförmigen Trägerkörper und einem lösbar mit dem Trägerkörper in Verbindung stehenden, rohrförmigen Führungskörper gemäss dem Oberbegriff des Anspruchs 1 bekannt. Ferner steht mit dem Trägerkörper ein Absaugstutzen sowie ein ringförmiges Dichtungselement in Verbindung. Das Dichtungselement überragt ein erstes in Bohrrichtung weisendes freies Ende des Trägerkörpers.

Die bei der Herstellung einer Bohrung auftretenden hohen axialen und radialen Belastungen führen zu einem schnellen Verschleiss des Dichtungselementes. Zudem kann der Absaugkopf nicht als Führung für Bohrwerkzeuge herangezogen werden, da der Absaugkopf beim Berühren des sich drehenden Bohrwerkzeuges aufgrund der elastischen Eigenschaften des Dichtungselementes seitlich wandert.

Der Erfindung liegt die Aufgabe zugrunde, einen wirtschaftlich herstellbaren Absaugkopf zu schaffen, mit dem eine genaue Führung des Bohrwerkzeuges beim Anbohrvorgang möglich ist und bei dem das Dichtungselement einem geringen Verschleiss unterliegt.

Die Lösung dieser Aufgabe erfolgt durch einen Absaugkopf, welcher die im kennzeichnenden Abschnitt des Patentanspruchs 1 angeführten Merkmale aufweist. Aufgrund der Ausgestaltung des Absaugkopfes, bei dem der erste Endbereich des Führungskörpers den Trägerkörper in Bohrrichtung überragt, wird ein vollständiges Zusammendrücken des Dichtungselementes verhindert. Hohe Belastungen auf das Dichtungselement in Bohrrichtung werden dadurch vermieden. Dies führt dazu, dass das Dichtungselement nur einen sehr geringen Verschleiss aufweist. Ein weiterer Vorteil, der sich aus der erfindungsgemässen Ausgestaltung des Absaugkopfes ergibt, ist in der Möglichkeit zu sehen, den Absaugkopf als Anbohr- bzw. Zentrierhilfe beim Anbohrvorgang zu verwenden, da der Führungskörper mit der bohrrichtungsseitigen Stirnseite des ersten Endbereiches eine reibschlüssige Verbindung mit der Oberfläche eines zu bearbeitenden Untergrundes eingehen kann. Aufgrund dieser reibschlüssigen Verbindung treten am Dichtungselement auch keine radialen Belastungen auf. Dies wirkt sich ebenfalls positiv auf die Lebensdauer des Dichtungselementes aus.

Damit der Führungsbereich des Führungskörper für das Bohrwerkzeug eine möglichst grosse Länge aufweist, überragt vorzugsweise der Führungskörper mit einem dem ersten Endbereich gegenüberliegenden, zweiten Endbereich ein zweites entgegen der Bohrrichtung weisendes freies Ende des Trägerkörpers axial.

Eine axiale Festlegung des Führungskörpers an dem Trägerkörper ohne zusätzliche Befestigungselemente wird zweckmässigerweise damit erreicht, dass die Endbereiche des Führungskörpers eine radiale Erstreckung aufweisen, die den Innendurchmesser des Trägerkörpers übersteigen und dass wenigstens einer der beiden Endbereiche in radialer Richtung in der Weise elastisch verformbar ist, dass dessen radiale Erstreckung den Innendurchmesser des Trägerkörpers nicht überragt. Mit Hilfe dieses radial verformbaren Endbereiches ist eine schnappartige Festlegung des Führungskörpers an dem Trägerkörper möglich.

Das Einsetzen des Führungskörpers in den Trägerkörper ist ohne die Zuhilfenahme zusätzlicher Werkzeuge möglich, wenn sich vorteilhafterweise die Aussenkontur der radialen Erstreckung des radial verformbaren Bereiches zum freien Ende des Trägerkörpers hin verjüngt.

Aus herstelltechnischen Gründen und aus Gründen der leichten Verformbarkeit ist vorzugsweise der radial verformbare Endbereich von mehreren im wesentlichen gleichmässig um den Umfang des Trägerkörpers verteilt angeordneten Klemmsegmenten gebildet.

Um Beschädigungen des Dichtungselementes verhindern zu können, die beim Verdrehen des Absaugkopfes gegenüber der Oberfläche eines Untergrundes durch eine hohe Reibung entstehen können, ist zweckmässigerweise das Dichtungselement an dem Trägerkörper drehbar gelagert.

Um den Dichtungslippen und dem gesamten Dichtungselement eine höhere Festigkeit verleihen zu können, ist vorteilhafterweise das Dichtungselement wenigstens teilweise zwischen zwei drehbar an einer flanschartigen Erweiterung des Trägerkörpers angeordneten Trägerringen angeordnet.

Ein schnelles Festlegen des Dichtungselementes an dem Absaugkopf bzw. ein schnelles Entfernen des Dichtungselementes von dem Absaugkopf wird vorzugsweise dadurch erreicht, dass wenigstens einer der beiden Trägerringe wenigstens ein erstes Verriegelungselement aufweist, das formschlüssig mit dem Dichtungselement und dem zweiten Trägerring in Verbindung bringbar ist.

Eine besonders gute Abdichtung der Bearbeitungsstelle wird vorzugsweise dadurch erreicht, dass das Dichtungselement am freien Ende zwei radial voneinander beabstandete, ringförmige Dichtungslippen aufweist

Die Erfindung wird anhand einer Zeichung, die ein Ausführungsbeispiel wiedergibt, näher erläutert.

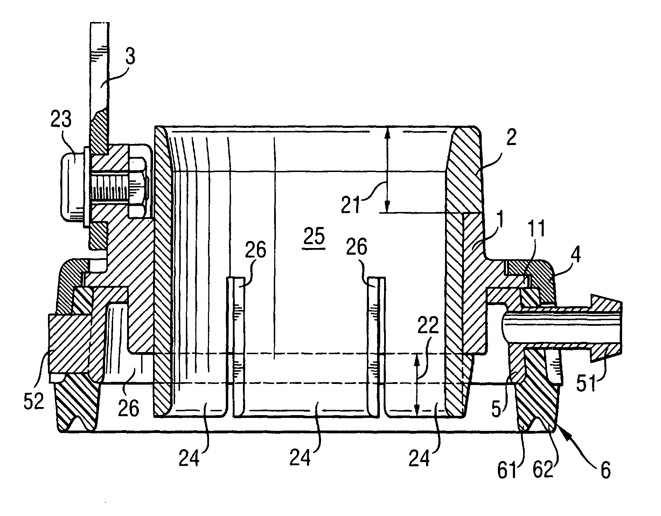

Der in der Zeichnung dargestellte Absaugkopf weist einen ringförmigen Trägerkörper 1, einen rohrförmigen Führungskörper 2, ein ringförmiges Dichtungselement 6, einen äusseren Trägerring 4 und einen inneren Trägerring 5 sowie einen an dem inneren Trägerring 5 angeordneten Absaugstutzen 51 auf. An diesem Absaugstutzen ist beispielsweise eine, mit einer nicht dargestellten externen Absaugvorrichtung in Verbindung stehende, Anschlussleitung anbringbar.

Der rohrförmige Führungskörper 2 weist eine zentrale Durchtrittsöffnung 25 auf, deren Innendurchmesser im wesentlichen jeweils dem Aussendurchmesser eines nicht dargestellten Bohrwerkzeugs entspricht. Diese Durchtrittsöffnung 25 erweitert sich zu einem entgegen der Bohrrichtung weisenden freien Ende des Führungskörpers 2. Zwei einander gegenüberliegende Endbereiche 21, 22 des Führungskörpers 2 überragen den Innendurchmesser des Trägerkörpers 1 in radialer Richtung und weisen je eine mit den Stirnseiten des Trägerkörpers 1 zusammenwirkende Anschlagschulter auf. Der bohrrichtungsseitige erste Endbereich 22 wird von mehreren gleichmässig am Umfang verteilt angeordneten elastischen Klemmsegmenten 24 gebildet, die sich radial auf den Innendurchmesser des Trägerkörpers 1 zusammendrücken lassen, damit der Führungskörper 2 aus dem Trägerkörper 1 entnehmbar bzw. in den Trägerkörper 1 einsetzbar ist. Dem leichten Einsetzen des Führungskörpers 2 in den Trägerkörper 1 dient eine sich in Bohrrichtung verjüngende Aussenkontur des ersten Endbereiches 22 bzw. der Klemmsegmente 24. Der Trägerkörper 1 ist mittels einem Verbindungselement 23 mit einem Führungsgestänge 3 in Verbindung bringbar.

Die zwischen den Klemmsegmenten 24 vorhandenen Zwischenräume 26 sind derart bemessen, dass das Kühlmittel bzw. das mit dem Bohrklein vermischte Kühlmittel von der Innenseite des Trägerkörpers 1 in eine von der Aussenseite des Trägerkörpers 1, dem inneren Trägerring 5 und der Innenseite des Dichtungselementes 6 gebildeten ringförmigen Kammer gelangen kann um von dort über den Absaugstutzen 51 abgesaugt werden zu können. Für den Fall, dass der Führungskörper 2 beispielsweise um 180° verdreht in dem Trägerkörper 1 angeordnet ist, können nicht dargestellte Vertiefungen an der Stirnseite des radial nicht verformbaren zweiten Endbereiches 21 des Führungskörpers 2 angeordnet sein.

Der Trägerkörper 1 weist eine flanschartige Erweiterung 11 auf, die der drehbaren Lagerung der beiden Trägerringe 4, 5 dienen. Der im radialen Abstand von dem Trägerkörper 1 angeordnete innere Trägerring 5 weist mehrere radial nach aussen hin abstehende Verriegelungselemente 52 auf. Das elastische Dichtungselement 6 weist entsprechend der Anzahl Verriegelungselemente 52 radiale Durchtrittsöffnung auf, durch die die Verriegelungselemente 52 ragen, wenn sich das Dichtungselement 6 auf der

Aussenseite des inneren Trägerrings 5 befindet. Der äussere Trägerring 4 dient der Fixierung des Dichtungselementes 6 auf dem inneren Trägerring 5. Dieser äussere Trägerring 4 weist ensprechend der Anzahl Verriegelungselemente 52 Verriegelungsöffnungen auf, die beispielsweise zum bohrrichtungsseitigen freien Ende des äusseren Trägerringes 4 offen ausgebildet sind. Diese Verriegelungsöffnungen sind beispielsweise durch ein Verschieben des äusseren Trägerringes 4 in Bohrrichtung formschlüssig mit den Verriegelungselementen 52 in Verbindung bringbar.

Beispielsweise weist der innere Trägerring 5 vier gleichmässig am Umfang verteilt angeordnete Verriegelungselemente 52 auf, die von der Bedienungsperson gut erkennbar sind und somit als Positionierungshilfe verwendet werden können um das Bohrwerkzeug entsprechend einer auf einem zu bearbeitenden Untergrund aufgebrachten Markierung auszurichten. Bei dieser Markierung handelt es sich beispielsweise um zwei vertikal zueinander stehende Linien, deren Schnittpunkt das Zentrum der Bearbeitungsstelle markiert.

Das den Trägerkörper 1 und den Führungskörper 2 in Bohrrichtung überragende Dichtungselement weist zwei in radialem Abstand voneinander angeordnete Dichtungslippen 61, 62 auf, die beispielsweise den gleichen Querschnitt aufweisen.

Die Verbindung zwischen dem Trägerkörper 1 und einem Führungsgestänge 3 ist beispielsweise in der Weise ausgebildet, dass der Trägerkörper 1 und somit der gesamte Absaugkopf um die Längsachse des Verbindungselementes 23 bzw. um eine senkrecht zur Bohrrichtung verlaufende Achse schwenkbar ist.

Sämtliche Bauteile des Absaugkopfes können aus einem Material mit geringem Gewicht wie beispielsweise Aluminium oder Kunststoff gefertigt sein.

## Patentansprüche

1. Absaugkopf für eine Absaugvorrichtung mit einem ringförmigen Trägerkörper (1), einem lösbar mit dem Trägerkörper (1 ) in Verbindung stehenden, rohrförmigen Führungskörper (2), einem mit dem Trägerkörper (1 ) in Verbindung stehenden Absaugstutzen (51 ) sowie einem ringförmigen Dichtungselement (6), das ein erstes in Bohrrichtung weisendes freies Ende des Trägerkörpers (1) überragt, wobei der Führungskörper (2) mit einem ersten Endbereich (22) das erste freie Ende des Trägerkörpers (1 ) axial um eine Länge überragt, **dadurch gekennzeichnet, dass** die das erste freie Ende des Trägerkörpers (1 ) axial überragende Länge höchstens derjenigen Länge entspricht um die das Dichtungselement (6) das erste freie Ende des Trägerkörpers (1 ) überragt und die bohrrichtungsseitige Stirnseite des ersten Endbereiches in eine reibschlüssige Verbindung mit einer Oberfläche eines zu bearbeitenden Untergrundes bringbar ist.

2. Absaugkopf nach Anspruch 1, **dadurch gekennzeichnet, dass** der Führungskörper (2) mit einem dem ersten Endbereich (22) gegenüberliegenden, zweiten Endbereich (21) ein zweites entgegen der Bohrrichtung weisendes freies Ende des Trägerkörpers (1) axial überragt.

3. Absaugkopf nach Anspruch 1 oder 2, **dadurch gekennzeichnet, dass** die Endbereiche (21, 22) des Führungskörpers (2) eine radiale Erstreckung aufweisen, die den Innendurchmesser des Trägerkörpers (1) übersteigen und dass wenigstens einer der beiden Endbereiche (21, 22) in radialer Richtung in der Weise verformbar ist, dass dessen radiale Erstreckung den Innendurchmesser des Trägerkörpers (1) nicht überragt.

4. Absaugkopf nach Anspruch 3, **dadurch gekennzeichnet, dass** sich die Aussenkontur der radialen Erstreckung des radial verformbaren Bereiches zum freien Ende des Trägerkörpers (1) hin verjüngt.

5. Absaugkopf nach Anspruch 3 oder 4, **dadurch gekennzeichnet, dass** der radial verformbare Endbereich (21, 22) von mehreren, im wesentlichen gleichmässig um den Umfang des Trägerkörpers (1) verteilt angeordneten Klemmsegmenten (24) gebildet ist.

6. Absaugkopf nach einem der Ansprüche 1 bis 5, **dadurch gekennzeichnet, dass** das Dichtungselement (6) an dem Trägerkörper (1) drehbar gelagert ist.

7. Absaugkopf nach Anspruch 6, **dadurch gekennzeichnet, dass** das Dichtungselement (6) wenigstens teilweise zwischen zwei drehbar an einer flanschartigen Erweiterung (11) des Trägerkörpers (1) angeordneten Trägerringen (4, 5) angeordnet ist.

8. Absaugkopf nach Anspruch 7, **dadurch gekennzeichnet, dass** wenigstens einer der beiden Trägerringe (4, 5) wenigstens ein erstes Verriegelungselement (52) aufweist, das formschlüssig mit dem Dichtungselement (6) und dem zweiten Trägerring (4, 5) in Verbindung bringbar ist.

9. Absaugkopf nach einem der Ansprüche 1 bis 8, **dadurch gekennzeichnet, dass** das Dichtungselement (6) am freien Ende zwei radial voneinander beabstandete, ringförmige Dichtungslippen (61, 62) aufweist.

## Claims

1. Suction head for a suction device with an annular support body (1), a tubular guide body (2) which is detachably connected to the support body (1), a suction socket (51) which is connected to the support body (1), and an annular sealing element (6) which protrudes over a first free end of the support body (1) oriented in the drilling direction, and the guide body (2) projects with a first end area (22) the first free end of the support body (1) axially by one length, **characterised in that** the length which axially protrudes over the first free end of the support body (1) maximally corresponds with the length by which the sealing element (6) projects over the first free end of the support body and the end of the first end area, as seen in the drilling direction, can be non-frictionally connected to a surface of a base to be processed.

2. Suction head according to Claim 1, **characterised in that** the guide body (2) axially projects with a second end area (21) positioned opposite the first end area (22) over a second free end of the support body (1) which is oriented in the drilling direction.

3. Suction head according to Claim 1 or 2, **characterised in that** the end areas (21, 22) of the guide body (2) have a radial extent which exceeds the inside diameter of the support body (1), and at least one of the two end areas (21, 22) can be reshaped in the radial direction in such a manner that their radial extent does not protrude over the inside diameter of the support body (1).

4. Suction head according to Claim 3, **characterised in that** the outside contour of the radial extent of the radially reshapable area narrows towards the free end of the support body (1).

5. Suction head according to Claim 3 or 4, **characterised in that** the radially reshapeable end area (21, 22) is formed by a plurality of clamping segments (24) which are essentially evenly spaced around the periphery of the support body (1).

6. Suction head according to one of Claims 1 to 5, **characterised in that** the sealing element (6) is rotary mounted on the support body (1).

7. Suction head according to Claim 6, **characterised in that** the sealing element (6) is arranged at least partially between two support rings (4, 5) which are in a rotary manner arranged on a flangelike extension (11) of the support body (1).

8. Suction head according to Claim 7, **characterised in that at** least one of the two support rings (4, 5) comprises at least one first locking element (52) which can be positively connected to the sealing element (6) and the second support ring (4, 5).

9. Suction head according to one of Claims 1 to 8, **characterised in that** the sealing element (6) comprises at the free end two annular sealing lips (61, 62) which are spaced apart from each other.

## Revendications

1. Suceur pour un dispositif d'aspiration comportant un corps de support (1) de forme annulaire, un corps de guidage (2) de forme tubulaire, en liaison séparable avec le corps de support (1), un tubulure d'aspiration (51) en liaison avec le corps de support (1) ainsi qu'un élément d'étanchéité (6) de forme annulaire qui dépasse d'une première extrémité libre du corps de support (1), dirigée dans le sens du perçage, le corps de guidage (2) dépassant axialement d'une certaine longueur, par une première zone terminale (22) de la première extrémité libre du corps de support (1), **caractérisé en ce que** la longueur dépassant axialement de la première extrémité libre du corps de support (1) correspond à la longueur de laquelle l'élément d'étanchéité (6) dépasse de la première extrémité libre du corps de support (1), et le côté frontal, du côté du sens du perçage, de la première zone terminale, peut être amené en liaison par friction avec une surface d'un support à traiter.

2. Suceur selon la revendication 1, **caractérisé en ce que** le corps de guidage (2) dépasse axialement, par une deuxième zone terminale (21) opposée à la première zone terminale (22), d'une deuxième extrémité libre du corps de support (1), dirigée dans le sens contraire au sens du perçage.

3. Suceur selon la revendication 1 ou 2, **caractérisé en ce que** les zones terminales (21, 22) du corps de guidage (2) présentent une étendue radiale qui est supérieure au diamètre intérieur du corps de support (1) et **en ce qu'**au moins l'une des deux zones terminales (21, 22) est déformable dans la direction radiale de manière que son étendue radiale ne dépasse pas le diamètre intérieur du corps de support (1).

4. Suceur selon la revendication 3, **caractérisé en ce que** le contour extérieur de l'étendue radiale de la zone déformable radialement se rétrécit vers l'extrémité libre du corps de support (1).

5. Suceur selon la revendication 3 ou 4, **caractérisé en ce que** la zone terminale (21, 22) déformable radialement est formée de plusieurs segments de serrage (24) répartis sensiblement régulièrement autour de la circonférence du corps de support (1).

6. Suceur selon l'une des revendications 1 à 5, **caractérisé en ce que** l'élément d'étanchéité (6) est monté tournant sur le corps de support (1).

7. Suceur selon la revendication 6, **caractérisé en ce que** l'élément d'étanchéité (6) est disposé au moins en partie entre deux anneaux de support (4, 5) disposés sur un élargissement (11) de type bride du corps de support (1).

8. Suceur selon la revendication 7, **caractérisé en ce qu'**au moins l'un des deux anneaux de support (4, 5) comporte au moins un premier élément de verrouillage (52) qui peut être amené en liaison par complémentarité de forme avec l'élément d'étanchéité (6) et avec le deuxième anneau de support (4, 5).

9. Suceur selon l'une des revendications 1 à 8, **caractérisé en ce que** l'élément d'étanchéité (6) comporte, à l'extrémité libre, deux lèvres d'étanchéité (61, 62) de forme annulaire, espacées l'une de l'autre radialement.
